# EUROPÄISCHE PATENTANMELDUNG

(11) **EP 0 990 798 A1**
(43) Veröffentlichungstag der Anmeldung: **05.04.2000**
(21) Anmeldenummer: 99810640.5
(22) Anmeldetag: 16.07.1999
(51) Int. Cl.: F04D 29/04, F04D 25/06, F04D 17/12, F04D 29/58

(54) **Turboverdichter**

(71) Anmelder: Sulzer Turbo AG, 8005 Zürich (CH)
(72) Erfinder: Grob, Denis, 8002 Zürich (CH); Pradetto, Jean-Claude, 8049 Zürich (CH); Dessibourg, Dominique, 8064 Zürich (CH)
(74) Vertreter: Sulzer Management AG

(57) **Zusammenfassung**

Der Turboverdichter (1) umfasst einen Elektromotor (2), einen mehrstufigen Radialturboverdichter (3) sowie eine gemeinsame Welle (13), wobei ein Teilabschnitt der Welle (13) als Rotor (2b) des Elektromotors (2) ausgebildet ist, und wobei ein weiterer Teilabschnitt der Welle (13) als Läufer (3e) des Radialturboverdichters (3) ausgebildet ist, wobei der Läufer (3e) eine Verdichterwelle (3a) sowie damit verbundene Verdichterräder (3b) umfasst, und wobei zum Lagern der Welle (13) mehrere elektromagnetische Radiallager (5) in Verlaufsrichtung der Welle (13) beabstandet angeordnet sind, wobei zwischen dem Rotor (2b) des Elektromotors (2) und dem Verdichterrad (3b) ein einziges elektromagnetisches Radiallager (5) angeordnet ist.

## Beschreibung

Die Erfindung betrifft einen Turboverdichter gemäss dem Oberbegriff von Anspruch 1.

Es ist ein Turboverdichter bekannt, welcher einen Radialturboverdichter sowie einen Elektromotor umfasst, wobei jede dieser Einheiten in einem separaten Gehäuse angeordnet ist, und die Welle des Elektromotors über ein flexibles Wellenteil an die Welle des Radialturboverdichters gekuppelt ist.

Nachteilig an diesem bekannten Turboverdichter ist die Tatsache, dass dieser relativ gross ausgestaltet ist, dass eine Mehrzahl von Dichtungen und Lagern erforderlich sind, und dass die Herstellungskosten des Turboverdichters daher relativ hoch sind.

Es ist Aufgabe der vorliegenden Erfindung einen wirtschaftlich vorteilhafteren Turboverdichter vorzuschlagen.

Diese Aufgabe wird gelöst mit einem Turboverdichter aufweisend die Merkmale von Anspruch 1 oder 2. Die Unteransprüche 3 bis 14 betreffen weitere, vorteilhaft gestaltete Ausbildungen des erfindungsgemässen Turboverdichters.

Die Aufgabe wird insbesondere gelöst mit einem Turboverdichter umfassend einen Elektromotor, einen mehrstufigen Radialturboverdichter sowie eine gemeinsame Welle, wobei ein Teilabschnitt der Welle als Rotor des Elektromotors ausgebildet ist, und wobei ein weiterer Teilabschnitt der Welle als Läufer des Radialturboverdichters ausgebildet ist, wobei der Läufer eine Verdichterwelle sowie damit verbundene Verdichterräder umfasst, und wobei zum Lagern der Welle mehrere elektromagnetische Radiallager in Verlaufsrichtung der Welle beabstandet angeordnet sind, und wobei zwischen dem Rotor des Elektromotors und dem Verdichterrad ein einziges elektromagnetisches Radiallager angeordnet ist.

Die Aufgabe wird weiter insbesondere gelöst mit einem Turboverdichter Turboverdichter umfassend einen Elektromotor, einen mehrstufigen Radialturboverdichter sowie eine gemeinsame Welle, wobei ein Teilabschnitt der Welle als Rotor des Elektromotors ausgebildet ist, und wobei ein weiterer Teilabschnitt der Welle als Läufer des Radialturboverdichters ausgebildet ist, wobei der Läufer eine Verdichterwelle sowie damit verbundene Verdichterräder umfasst, und wobei zum Lagern der Welle mehrere elektromagnetische Radiallager in Verlaufsrichtung der Welle beabstandet angeordnet sind, wobei die Radiallager auf einem gemeinsamen Basiselement abgestützt sind.

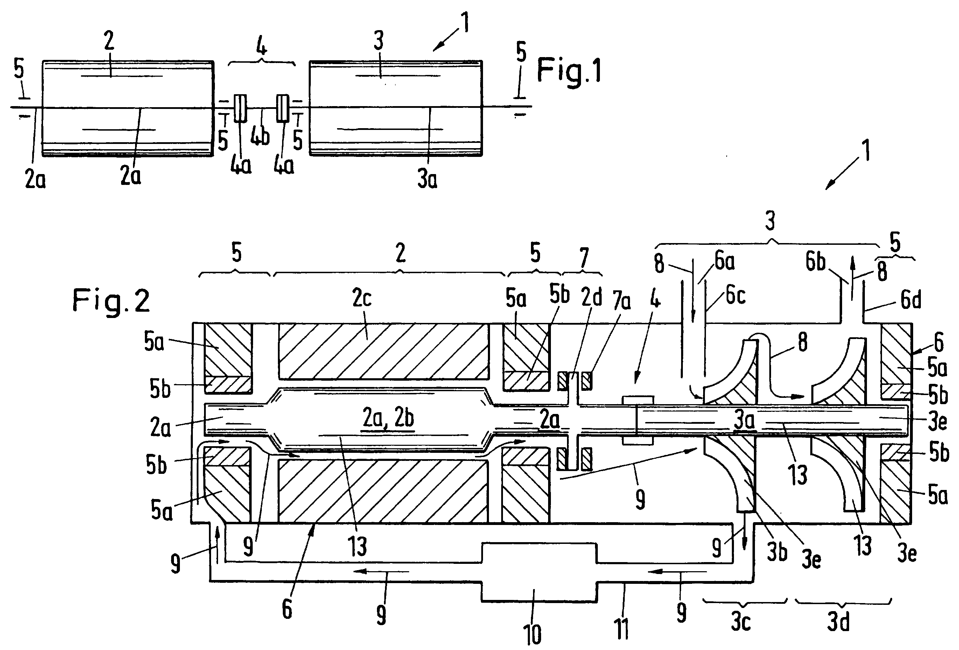

Fig. 1 zeigt einen bekannten Turboverdichter, welcher einen beidseitig gelagerten Elektromotor sowie einen beidseitig gelagerten Radialturboverdichter umfasst, wobei die Welle des Elektromotors über ein flexibles Wellenteil an die Welle des Radialturboverdichters gekuppelt ist.

Ein Vorteil des erfindungsgemässen Turboverdichters ist darin zu sehen, dass zur vollständigen Lagerung der gesamten Welle, gegenüber der Ausführungsform gemäss Fig. 1, drei Radiallager, insbesondere ausgestaltet als elektromagnetische Radiallager, genügen, indem zwischen dem Elektromotor und dem Verdichter ein einziges Radiallager angeordnet ist. Somit ist der Turboverdichter günstiger herstellbar.

Die gesamte Welle kann einstückig ausgestaltet sein. In einer vorteilhaften Ausgestaltung ist die Welle des Elektromotors sowie die Welle des Radialturboverdichters über eine Kupplung, insbesondere eine Kupplung mit möglichst hoher Steifigkeit, verbunden. Eine sehr steife Kupplung erlaubt eine Gesamtwelle zu bilden, welche in Verlaufsrichtung der Welle einen weitgehend homogenen Steifigkeitsverlauf aufweist. Die Gesamtwelle beziehungsweise die gesamten rotierbaren Komponenten des Turboverdichters verhalten sich dadurch wie eine kompakte Welle, was sich positiv auf ein stabiles Laufverhalten des Turboverdichter auswirkt. Zudem ermöglicht dies die gesamte Welle mit Hilfe eines einzigen Axiallagers in axialer Richtung zu lagern. In der aus Fig. 1 bekannten Ausführungsform ist für den Elektromotor sowie den Radialturboverdichter je ein separates Axiallager erforderlich.

Wenn nur an einer Seite des Elektromotors ein Radialturboverdichter angeordnet ist, so genügen drei in Verlaufsrichtung der Welle beabstandet angeordnete elektromagnetische Radiallager zur vollständigen Lagerung der gesamten Welle. Ist an beiden Seiten des Elektromotors je ein Radialturboverdichter angeordnet, so genügen vier in Verlaufsrichtung der Welle beabstandet angeordnete elektromagnetische Radiallager zur vollständigen Lagerung der gesamten Welle.

Der Verzicht auf ein Radiallager zwischen dem Elektromotor und dem Radialturboverdichter weist zudem den Vorteil auf, dass die Länge der gesamten Welle kürzer ist, was rotordynamisch vorteilhaft ist, eine leichtere Welle zu bilden ermöglicht, und zudem eine kompaktere Bauweise des Turboverdichters ergibt. Dabei ist zu beachten, dass elektromagnetische Radiallager im Vergleich zu hydrodynamischen Radiallagern eine wesentlich geringere Lagerkraft aufweisen, sodass das durch die kürzere Welle gewonnene, vorteilhaftere rotordynamische Verhalten sowie das geringere Gewicht von entscheidender Bedeutung ist, um den Turboverdichter sicher und störungsfrei mittels elektromagnetischer Lager zu betreiben. Dieser Aspekt ist insbesondere von Bedeutung bei Radialturboverdichtern, welche ein Fluid auf einen hohen Druck von beispielsweise 600 Bar verdichten, weil bei einem derart hochverdichteten Fluid eine Strömungsstörung relativ hohe radiale und axiale Kräfte bewirkt, die von dem eine begrenzte Tragfähigkeit aufweisenden elektromagnetischen Lager nur dann aufgefangen werden könne, wenn das rotordynamische Verhalten des Gesamtsystems optimiert ist.

In einer besonders vorteilhaften Ausgestaltung sind der Motor sowie der Radialturboverdichter in einem gemeinsamen, hermetisch abgedichteten Gehäuse, insbesondere ein Druckgehäuse angeordnet, wobei eine fluidleitende Zu- und Ableitung das Gehäuse durchdringen oder am Gehäuse angeflanscht sind, um dem Radialturboverdichter das zu komprimierenden Fluid zu- und abzuführen. Diese Anordnung weist den entscheidenden Vorteil auf, dass an der Welle keine Dichtungen gegen aussen, insbesondere gegen Atmosphäre mehr erforderlich sind, was nebst dem Kostenvorteil die weiteren Vorteile ergibt, dass durch Dichtungsprobleme verursachte Stillstandzeiten nicht mehr auftreten, und dass die Gesamtlänge der Welle zusätzlich reduziert werden kann, was wiederum das Gesamtgesicht der Welle sowie die Stabilität der durch elektromagnetische Radiallager gehaltenen Welle erhöht.

Der Radialturboverdichter mit einem nach Aussen hermetisch abgedichteten Druckgehäuse erlaubt die erfindungsgemässe Motor-Kompressor-Anlage auch an Standorten zu betreiben, welche bisher für den Betrieb eines Radialturobverdichters ungeeignet waren, beispielsweise unter Wasser oder in einer Umgebung mit hohem Schadstoffanteil, hohem Verschmutzungsgrad oder hoher Explosionsgefahr.

Ein weiterer Vorteil des erfindungsgemässen Turboverdichters ist darin zu sehen, dass dieser auch ferngesteuert sehr sicher betreibbar ist. Der Turboverdichter weist beispielsweise kein aufwendiges Ölsystem zur Lagerung des Rotors auf. Zudem sind keine oder nur wenige Dichtungen erforderlich. Der Turboverdichter weist daher keine Komponenten auf, zu deren Betrieb ein Fachmann vor Ort erforderlich ist, oder Komponenten welche eine regelmässige Kontrolle in relativ kurzen Zeitabständen erfordern. Ein Start- und Stoppvorgang des Turboverdichters kann ferngesteuert ablaufen, wobei mittels Sensoren die Zustände des Turboverdichters von Ferne überwachbar sind, und beim Feststellen einer Unregelmässigkeit geeignete Massnahmen, zum Beispiel ein Stoppen, automatisch eingeleitet werden können. Ein Turboverdichter weist in der Ausführungform mit hermetisch abgedichtetem Druckgehäuse den weiteren Vorteil auf, dass die Gefahr für von Aussen einwirkenden Störeinflüssen sehr gering ist.

Um das Fluid auf einen hohen Enddruck zu komprimieren war es bisher erforderlich den Turboverdichter mit sehr teuren Trockengasdichtungen zu versehen, wobei diese Trockengasdichtungen nebst dem hohen Preis den weiteren Nachteil aufweisen, dass sie eine erhebliche Wartung erfordern und zudem eine Risikokomponente darstellen, sind doch die meisten unvorhersehbaren Stillstandzeiten eines Turboverdichters durch Schäden an der Trockengasdichtung bedingt.

In einer weiteren vorteilhaften Ausgestaltung wird ein Teil des komprimierten Fluides bzw. Prozessgases zur Längsgaskühlung des Motors sowie der Radiallager verwendet. Dies ist insbesondere bei der Verwendung eines gemeinsamen, hermetisch abgedichteten Druckgehäuses von Vorteil. Als Elektromotor wird dabei vorzugsweise ein für Saugdruck oder Stillstanddruck ausgelegter Motor verwendet. In einer weiteren vorteilhaften Ausgestaltung weist der Elektromotor einen separaten, vom Radialturboverdichter getrennten Kühlkreislauf auf.

In einer vorteilhaften Ausgestaltung des erfindungsgemässen Turboverdichters weist dieser ein gemeinsames Basiselement auf, welches beispielsweise plattenförmig ausgestaltet ist, und auf welchem einige, vorzugsweise alle Radiallager abgestützt sind. Die Anordnung der Radiallager auf einem gemeinsamen Basiselement weist den Vorteil auf, dass diese in einer definierten Lage gegeneinander ausgerichtet sind, und dass die auf Grund von Zug-, Druck- oder Scherspannungen beziehungsweise durch Temperatureinflüsse bedingten gegenseitigen Verschiebungen der Radiallager minimal gehalten werden können. Somit ist eine gegenseitig präzis angeordnete Ausrichtung der Radiallager bei unterschiedlichsten Betriebsbedingungen gewährleistet. Vorteilhafterweise werden auf dem Basiselement nicht nur die Radiallager angeordnet sonder auch die übrigen Elemente wie der Elektromotor, der Radialturboverdichter usw. Dies ermöglicht, nicht zuletzt auch dank der kompakten Bauweise des erfindungsgemässen Turboverdichters, den Turboverdichter als gesamtes Modul fertig im Herstellungswerk zu montieren. Dieses Modul kann am Anwendungsort sehr schnell in Betrieb genommen werden, da es nicht mehr erforderlich ist den Radialturboverdichter sowie den Elektromotor separat auf einer Unterlage zu verankern und dabei deren gegenseitige Lage genau einzustellen. In einer vorteilhaften Ausgestaltung ist der Turboverdichter innerhalb eines Gehäuses angeordnet, wobei ein Teil des Gehäuses, beispielsweise die unten angeordnete Innenwand des Gehäuses, zugleich das gemeinsame Basiselement ausbildet.

In einer vorteilhaften Ausgestaltung des Turboverdichters sind der Radialturboverdichter sowie der Motor in einem gemeinsamen Gehäuse angeordnet, wobei das Gehäuse aus mehreren miteinander verbindbaren Teilgehäusen, oder aus einem im wesentlichen einzigen Gehäuse besteht. Vorteilhafterweise ist im einen Teilgehäuse die gesamte Antriebsvorrichtung und in einem weiteren Teilgehäuse der gesamte Radialturboverdichter angeordnet, wobei diese Teilgehäuse vorzugsweise derart gegenseitig angepasst ausgestaltet sind, dass diese direkt gegenseitig fest verbindbar sind. In einer vorteilhaften Ausführungsform ist das gemeinsame Gehäuse derart steif ausgestaltet, dass der gesamte Turboverdichter umfassend den Radialturboverdichter, den Motor usw. durch das gemeinsame Gehäuse gegenseitig im wesentlichen verschiebungsfrei gelagert ist, sodass das gemeinsame Gehäuse, beispielsweise ausgestaltet als ein Rohr, ohne äusserliche Abstützung, oder mit nur einer oder zwei Abstützungen auf einem Untergrund abstützbar ist. Diese Anordnung weist den Vorteil auf, dass die Möglichkeit stationärer und/oder instationärer Verlagerungen der Lagerstellen weitgehendst unterbunden sind, weshalb auch eine Lagereinstellung in der Werkstatt oder vor Ort entfällt, sodass die Herstellung und die Inbetriebsetzung des Turboverdichters kostengünstiger erfolgt. Sollte im gemeinsamen Gehäuse trotzdem eine geringfügige Verlagerung der einzelnen Wellen beziehungsweise der statisch angeordneten Teile des Motors oder des Radialturboverdichters im gemeinsamen Gehäuse auftreten, so besteht auch die Möglichkeit diese Abweichung dank der Verwendung elektromagnetischer Radiallager zu kompensieren.

Der aus Fig. 1 bekannte Turboverdichter besteht aus einem separaten Motor mit einem eigenen Gehäuse, sowie aus einem Radialturboverdichter mit einem weiteren, eigenen Gehäuse. Bei dieser bekannten Anordnung stellt die gegenseitige Bewegung der Gehäuse beziehungsweise die Verlagerung der einzelnen Wellen ein erhebliches Problem dar, welches dadurch verursacht wird, dass jedes Gehäuse individuell am Boden verankert ist. Durch unterschiedliche thermische Dehnungen oder sonstige einwirkende Kräfte auf die einzelnen Gehäuse verändert sich deren Lage. Die erfindungsgemässe Anordnung von Motor und Radialturboverdichter auf einem gemeinsamen Basiselement, insbesondere in einem gemeinsamen Gehäuse, weist den Vorteil auf, dass das Basiselement beziehungsweise das Gehäuse die Referenz für die Lagerung bildet, und daher eine gegenseitige Veränderung der Lage von Motor und Radialturboverdichter weitgehend ausgeschlossen ist.

Die Erfindung wird im weiteren an Hand mehrerer Ausführungsbeispiele beschrieben, wobei dieselben Bezugszeichen dieselben Gegenstände betreffen. Es zeigen:
- Fig. 1: eine schematische Anordnung eines bekannten Turboverdichters;
- Fig. 2: ein Längsschnitt eines Turboverdichters mit einem Elektromotor sowie einem Radialturboverdichter;
- Fig. 3: ein Längsschnitt eines Turboverdichters mit beidseitig angeordneten Radialturboverdichtern;
- Fig. 4: ein weiterer Längsschnitt eines Turboverdichters mit beidseitig angeordneten Radialturboverdichtern;
- Fig. 5: ein Längsschnitt durch die Verbindungsstelle zweier Teilgehäuse;
- Fig. 6: ein Längsschnitt eines schematisch dargestellten Gehäuses bestehend aus drei Teilgehäusen;
- Fig. 7: ein Längsschnitt eines Turboverdichters mit separatem Kühlsystem.

Fig. 1 zeigt schematisch einen bekannten Turboverdichter 1, welcher einen Radialturboverdichter 3 mit einer Welle 3a sowie einen antreibenden Elektromotor 2 mit einer Welle 2a umfasst. Die Welle 3a des Radialturboverdichters 3 ist durch zwei Radiallager 5 beidseitig gelagert. Ebenso ist die Welle 2a des Elektromotors 2 durch je zwei Radiallager 5 beidseitig gelagert. Die beiden Wellen 2a, 3a sind über eine Kupplung 4 umfassend zwei Kupplungsteile 4a und ein flexibles Zwischenstück 4b verbunden, sodass der Elektromotor 2 über die Welle 2a und die Kupplung 4 die Welle 3a des Radialturboverdichters 3 antreibt.

Fig. 2 zeigt einen Turboverdichter 1, welcher in einem hermetisch abgedichteten Druckgehäuse 6 angeordnet ist, wobei je eine das Druckgehäuse 6 durchdringende Zuleitung 6c und Ableitung 6d vorgesehen ist, um den Radialturboverdichter 3 fluidleitend mit einer ausserhalb des Druckgehäuses 6 angeordneten Vorrichtung zu verbinden. Der Elektromotor 2 umfasst den Rotor 2b sowie den Stator 2c, wobei der Rotor 2b Teil der Motorwelle 2a ist, und die Motorwelle 2a beidseitig im elektromagnetischen Radiallager 5, umfassend je eine Abstützvorrichtung 5a sowie eine elektromagnetische Spule 5b, in radialer Richtung gelagert ist. Die Motorwelle 2a weist gegen den Radialturboverdichter 3 hin ein Axiallager 7 auf, welches eine Teil der Motorwelle 2a bildende Scheibe 2d sowie elektromagnetische Spulen 7a umfasst. Die Motorwelle 2a ist an deren Endabschnitt über eine Kupplung 4 mit dem Läufer 3a des Radialturboverdichters 3 verbunden, wobei der gegenüberliegende Endabschnitt des Läufers 3a in einem Radiallager 5 gelagert ist. Die Motorwelle 2a sowie der Läufer 3a bilden eine gemeinsame Welle 13. In Verlaufsrichtung des Läufers 3a sind zwei Verdichterräder 3b angeordnet, welche eine erste Verdichtungsstufe 3c sowie eine zweite Verdichtungsstufe 3d ausbilden. Nicht dargestellt sind die Leitschaufeln 3f des Radialturboverdichters 3. Der Hauptmassenstrom 8 des zu komprimierenden Fluides, vorzugsweise in Form eines Gases, tritt über die Eintrittsöffnung 6a und die Zuleitung 6c in die erste Verdichtungsstufe 3c ein und wird nachfolgend zur zweiten Verdichtungsstufe 3d und nachfolgend über die Ableitung 6d zur Austrittsöffnung 6b geleitet. Ein geringer Bruchteil des Hauptmassenstroms 8 wird an der Austrittsstelle der ersten Verdichtungsstufe 3c über eine Verbindungsleitung 11 abgeleitet und als Kühlgasmassenstrom 9 einer Filtervorrichtung 10 zugeleitet, welche den Kühlgasmassenstrom 9 von Verunreinigungen reinigt, und den gereinigten Kühlgasmassenstrom 9 als Kühlmittel den elektromagnetischen Radiallagern 5 sowie dem Elektromotor 2 zuführt. Im dargestellten Ausführungsbeispiel wird der Kühlgasmassenstrom 9 in Längsrichtung des Gehäuses fliessend, dem Radiallager 5 und nachfolgend dem Elektromotor 2 sowie dem weiteren Radiallager 5 zugeführt, wobei das Kühlgas vorzugsweise zwischen der Welle 2a und dem jeweiligen Magnet 5b, 2c durchgeführt wird. Der Kühlgasmassenstrom 9 mündet zur Ansaugseite der ersten Verdichtungsstufe 3c, wir von dieser wiederum komprimiert, und wird als Hauptmassenstrom 8 und/oder als Kühlgasmassenstrom 9 weiter gefördert. Die Verbindungsleitung 11 und die Filtervorrichtung 10 können innerhalb oder ausserhalb des Druckgehäuses 6 verlaufend angeordnet sein. Der Turboverdichter 1 gemäss der in Fig. 2 dargestellten Ausführungsform weist den Vorteil auf, dass keine Dichtung der Motorwelle 2a beziehungsweise des Läufers 3a gegenüber Atmosphäre erforderlich ist. Zudem ist keine Dichtung zwischen zwischen dem Motor 2 und der ersten Verdichtungsstufe 3c erforderlich. Der Elektromotor 2 ist dabei derart auszulegen, dass dieser mit Saugdruck oder mit Stillstanddruck betreibbar ist.

Der Turboverdichter 1 könnte natürlich eine Mehrzahl von in Verlaufsrichtung des Läufers 3a beabstandet angeordneten Verdichterräder 3b aufweisen, so beispielsweise auch gesamthaft vier, sechs, acht oder zehn Verdichterräder 3b. Der zu erzielende Kompressiondruck ist nach oben weitgehend offen, wobei durch eine entsprechende Anzahl in Serie geschalteter Verdichterräder 3b beispielsweise ein Kompressionsdruck von 600 Bar erreichbar ist. Der Turboverdichter 1 könnte auch einen oder mehrere weitere Radialturboverdichter 3 und/oder Elektromotoren 2 umfassen, welche in Verlaufsrichtung des Läufers 3a;2a angeordnet sind, wobei alle Läufe 3a;2a eine gemeinsame Welle ausbilden. Diese gemeinsame Welle könnte durch Radiallager, insbesondere magnetische Radiallager 5 gelagert sein, wobei zwischen je einem Radialturboverdichter 3 vorzugsweise ein einziges Radiallager 5 angeordnet ist. Vorzugsweise sind alle Radialturboverdichter 3 gemeinsam mit dem Elektromotor 2 oder den Elektromotoren 2 in einem gemeinsamen, einzigen Druckgehäuse 6 angeordnet.

Die elektromagnetischen Radiallager 5 sowie die den Radiallagern 5 zugeordneten Abschnitte der Wellen 2a und 3a weisen weitere, für einen Fachmann selbstverständliche und daher nicht dargestellte Komponenten auf, um ein elektromagnetisches Radiallager 5 auszubilden, wie elektrische Spulen, ferromagnetische Teile usw. Dasselbe gilt für den Elektromotor 2, welcher ebenfalls nur schematisch dargestellt ist.

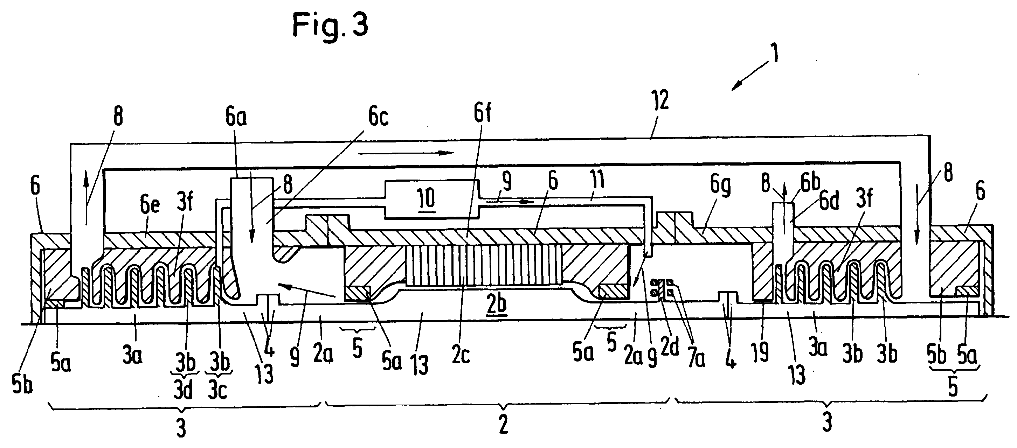

Fig. 3 zeigt einen Längsschnitt eines weiteren Ausführungsbeispiels eines Turboverdichters 1 umfassend zwei Radialturboverdichter 3, wobei an jeder Seite des Elektromotors 2 je ein Radialturboverdichter 3 angeordnet und dessen Läufer 3a über eine Kupplung 4 mit der Motorwelle 2a verbunden ist. Es ist nur die obere Hälfte des Turboverdichters 1 dargestellt. Es werden nur die gegenüber der Ausführungsform gemäss Fig. 2 wesentlichen Unterschiede im Detail beschrieben. Die gesamte Welle umfassend die Motorwelle 2a sowie die beiden Läufer 3a ist durch vier, in Längsrichtung der gesamten Welle verteilt angeordnete elektromagnetische Radiallager 5 gelagert. Der links angeordnete Radialturboverdichter 3 ist als Niederdruckteil angeschlossen und weist sechs Verdichterräder 3b auf. Der rechts angeordnete Radialturboverdichter 3 ist als Hochdruckteil angeschlossen und weist fünf Verdichterräder 3b auf. Ebenfalls dargestellt sind die Leitschaufeln 3f. Der Hauptmassenstrom 8 tritt über die Zuleitung 6c in den Niederdruckteil ein, und wird nach dem Komprimieren über eine Verbindungsleitung 12 dem Hochdruckteil zugeführt, wobei der Hauptmassenstrom 8 den Hochdruckteil nach dem Komprimieren über die Ableitung 6d verlässt. Ein geringer Teil des Hauptmassenstroms 8 wird nach der ersten Verdichtungsstufe 3c als Kühlgasmassenstrom 9 in die Verbindungsleitung 11 geleitet, wobei dieser Kühlgasmassenstrom 9 nach dem Durchfliessen des Filters 10 der rechten Seite des Elektromotors 2 zugeführt wird, und danach in Längsrichtung der Motorwelle 2a strömend der Saugöffnung der ersten Verdichtungsstufe 3c zufliesst. Somit wird ein Teil des sich im Radialturboverdichters 3 befindlichen Prozessgases zur Kühlung des Elektromotors 2 abgeleitet und verwendet.

Zwischen dem rechts angeordneten Radialturboverdichter 3 sowie dem Elektromotor 2 ist am Läufer 3a eine berührungsfreie Dichtung 19 angeordnet, um den Innendruck an der rechten Seite des Elektromotors 2 entsprechend tief zu halten. Der Elektromotor 2 ist wiederum ausgelegt, um bei einem Saugdruck oder einem Stillstanddruck betreibbar zu sein. Die Verbindungsleitung 12 und/oder die Verbindungsleitung 11 als auch die Filtervorrichtung 10 könnten auch vollständig innerhalb des Gehäuses 6 verlaufend angeordnet sein.

Die Radialturboverdichter 3 können beispielsweise auch in einer 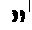 back to back" Anordnung angeordnet sein, um die in Verlaufsrichtung der Motorwelle 2a wirkenden Schubkräfte zu kompensieren und zu reduzieren.

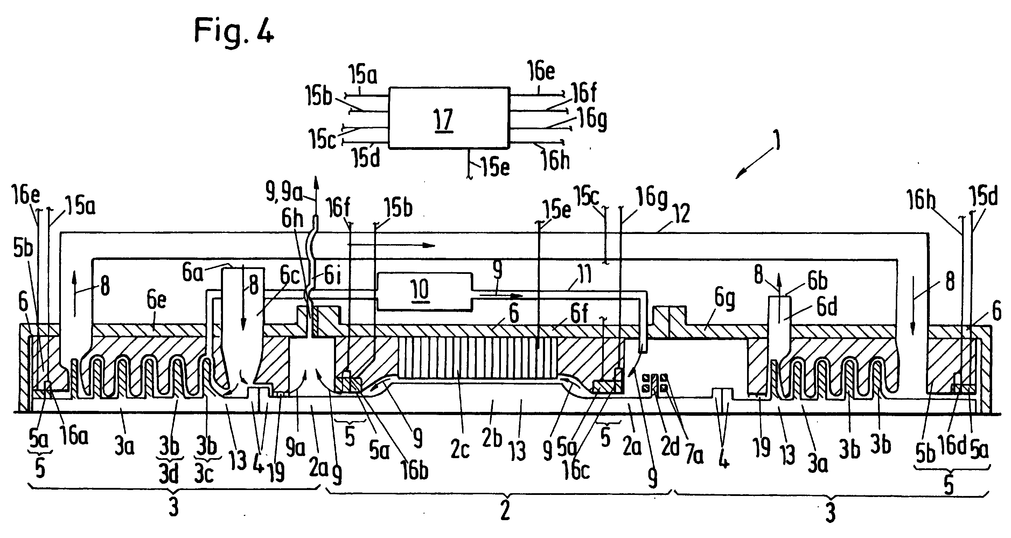

Das Gehäuse 6 setzt sich in den Ausführungsformen gemäss Fig. 3 und 4 aus den drei Teilgehäusen 6e, 6f, 6g zusammen, wobei die Teilgehäuse 6e, 6g Teil des Radialturboverdichters 3 bilden und das Teilgehäuse 6f Teil des Motors 2 bildet. Die Teilgehäuse 6e, 6f, 6g sind derart gegenseitig angepasst ausgestaltet, dass sie, wie in den Figuren 3 und 4 dargestellt, fest miteinander verbindbar sind, beispielsweise mittels Schrauben. An diesen Verbindungsstellen können zudem Dichtungen angeordnet sein, um den Innenraum des Gehäuses 6 hermetisch abzudichten, sodass nur noch über die vorgesehenen Leitungen 6c, 6d, 11, 12 eine Fluid leitende Verbindung zwischen dem Innenraum des Gehäuses 6 und dem Aussenraum besteht, wobei bedingt durch die in Fig. 3 und 4 dargestellte Anordnung der Leitungen 11 und 12 nur durch die Leitungen 6c, 6d und gegebenenfalls durch die Ableitung 6i eine fluidleitende Verbindung zum Aussenraum besteht.

Der in Fig. 4 dargestellte Turboverdichter 1 weist, an sonst im wesentlichen gleich ausgestaltet wie der Turboverdichter gemäss Fig. 3, im Gehäuseteil 6e eine Austrittsöffnung 6h sowie eine daran anschliessend angeordnete Ableitung 6i auf, durch welche der Kühlgasmassenstrom 9 sowie ein geringfügiger Anteil des Hauptmassenstroms 9a austritt und einer Anlage fremden Prozessquelle zugeführt wird. Diese Anordnung weist gegenüber dem Ausführungsbeispiel gemäss Fig. 3 den Vorteil auf, dass der Druck in der der Ableitung 6i nachfolgenden Vorrichtung unabhängig vom Druck im Radialturboverdichter 3 ist, wobei dieser Druck vorzugsweise derart gewählt ist, dass die Druckdifferenz des Prozessgases, welches zur Motorkühlung verwendet wird, zwischen der Verbindungsleitung 11 und der Ableitung 6i eine geringere Druckdifferenz aufweist als in der Ausführungsform gemäss Fig. 3, was den Vorteil ergibt, dass die zwischen den rotierenden und den statischen Teilen auftretenden Dissipationsverluste im Motor 2 vermindert sind. Zwischen dem Motor 2 und dem Radialturboverdichter 3 ist beidseitig eine Dichtung 19 angeordnet.

In Fig. 4 ist zudem eine Regelvorrichtung 17 dargestellt, welche zumindest zum Ansteuern der elektromagnetischen Radiallager 5 sowie des Motors 2 dient. Im Bereich der Radiallager 5 sind Sensoren 16a, 16b, 16c, 16d angeordnet, welche die Lage der gesamten Welle 13 bzw. der Teilwellen 2a, 3a bezüglich der Radiallager 5 erfassen, wobei die Sensoren 16a, 16b, 16c, 16d über elektrische Leitungen 16e, 16f, 16g, 16h mit der Regelvorrichtung 17 verbunden sind. Zur Ansteuerung der magnetischen Spulen der Radiallager 5 sind elektrische Leitungen 15a, 15b, 15c, 15d angeordnet, welche mit der Regelvorrichtung 17 verbunden sind. Zudem ist eine elektrische Leitung 15e vorgesehen, welche die Regelvorrichtung 17 über eine nicht dargestellte Leistungselektronik mit der Wicklung des Elektromotors 2 verbindet.

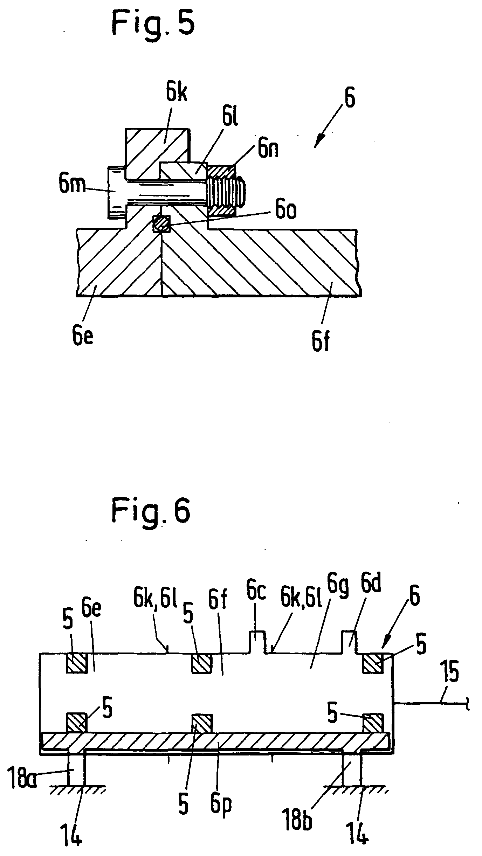

Fig. 5 zeigt einen Längsschnitt durch ein Gehäuse 6, wobei die Verbindungsstelle zweier Teilgehäuse 6e, 6f dargestellt ist. Der Flansch 6k des ersten Teilgehäuses 6e weist eine derart ausgestaltete Ausnehmung auf, dass der Flansch 6l des zweiten Teilgehäuses 6f darin eine Aufnahme findet, wobei die gegenseitige Lage der beiden Teilgehäuse 6e, 6f beim Zusammenfügen durch die Flansche 6k, 6l gegenseitig zentriert werden. Die Flansche 6k, 6l werden durch mehrere in Umfangsrichtung verteilt angeordnete Schrauben 6m mit Mutter 6n zusammengehalten, wobei an der Stirnseite der Flansche 6k, 6l eine in Umfangsrichtung verlaufende Nut vorgesehen ist, in welcher ein Dichtelement 6o angeordnet ist, um den durch die beiden Teilgehäuse 6e, 6f begrenzten Innenraum gegen aussen abzudichten.

Fig. 6 zeigt einen Längsschnitt eines schematisch dargestellten Gehäuses 6 bestehend aus drei Teilgehäusen 6e, 6f, 6g mit Flanschen 6k, 6l sowie einer Zuleitung 6c und einer Ableitung 6d. Das Gehäuse 6 ist über zwei Abstützelemente 18a, 18b auf einen Untergrund 14 abgestützt. Innerhalb des Gehäuses ist ein Basiselement 6p angeordnet, welches eine steife, in Längsrichtung des Gehäuses 6 verlaufende Abstützung, insbesondere eine Abstützfläche ausbildet, auf welchem die elektromagnetischen Radiallager 5 angeordnet sind. Die Funktion des Basiselemente 6p ist eine möglichst stabile und vorzugsweise Temperatur unempfindliche Referenzebene zu bilden, auf welcher zumindest einige Radiallager 5 angeordnet sind. Das Basiselement 6p kann in einer Vielzahl von Ausführungsformen ausgestaltet sein, so beispielsweise als feste, massive Platte, als Träger oder als Gitterrost. Auf dem Basiselement 6p können weitere Komponeten wie der Elektromotor 2 oder der Radialturboverdichter 3 verankert sein. Die Verwendung eines Basiselemente 6p ermöglicht die elektromagnetischen Radiallager 5 gegenseitig sehr präzise und insbesondere genau fluchtend anzuordnen. Die gemeinsame Anordnung der Radiallager 5 auf dem Basiselement 6p weist den Vorteil auf, dass die auf Grund von angreifenden Zug-, Druck- oder Scherkräften oder durch Temperatureinflüsse bedingten gegenseitigen Verschiebungen der Radiallager sehr gering ausfallen. Zudem kann diese Anordnung sehr schnell betriebsbereit aufgestellt werden. Bei der aus Fig. 1 bekannten Anordnung war es erforderlich die beiden separaten Vorrichtungen Elektromotor 2 und Radialturboverdichter 3 getrennt aufzustellen und in einem zeitaufwendigen Verfahren genau gegenseitig auszurichten, damit die Wellen 2a, 3a fluchtend angeordnet sind. Trotz dieses Aufwandes können sich der Elektromotor 2 und/oder der Radialturboverdichter 3 beziehungsweise deren Radiallager bedingt beispielsweise durch einwirkende Kräfte, eine Verschiebung des Untergrundes oder Temperaturänderungen gegenseitig verschieben.

Die durch elektromagnetische Radiallager erzeugbare Lagerkraft ist wesentlich geringer als die durch bekannte, hydrodynamische Lager erzeugbare Lagerkraft. Deshalb ist auch die genaue gegenseitige Ausrichtung der elektromagnetischen Radiallager sowie das Verhindern einer gegenseitigen Verschiebung der Radiallager von zentraler Bedeutung. Das elektromagnetische Radiallager wird üblicherweise derart betrieben, dass die Welle in der geometrischen Mitte des Radiallagers gehalten wird. Ein gegenseitige Verschieben der Radiallager hat zur Folge, dass das Radiallager erhebliche Kräfte aufzuwenden hat, um die Welle trotzdem in der geometrischen Mitte zu halten. Da das elektromagnetische Radiallager relativ bald in den Zustand einer magnetischen Sättigung gelangt, verfügt das Radiallager in dieser Situation über geringere, zum Tragen der Welle zur Verfügung stehende Kräfte. Dieser Effekt verringert die Betriebssicherheit des Turboverdichters, wobei das elektromagnetische Radiallager im Extremfall nicht mehr in der Lage die Welle zu tragen. Daher ist es bei der Verwendung von elektromagnetischen Radiallagern von zentraler Bedeutung, dass diese möglichst genau fluchtend angeordnet sind, und dass sie derart angeordnet sind, dass ein gegenseitiges Verschieben der Radiallager auch während dem Betrieb des Turboverdichters nach Möglichkeit verhindert wird. Daher ist es auch vorteilhaft, wenn die elektromagnetischen Radiallager in Verlaufsrichtung der gemeinsamen Welle 13 einen grösseren gegenseitigen Abstand aufweisen. Bei der bekannten Ausführungsform gemäss Fig. 1 weisen die beiden mittleren Radiallager 5 einen relativ geringen gegenseitigen Abstand auf, sodass bei einem gegenseitigen Versatz dieser beiden mittleren Radiallager 5 das Problem auftreten kann, dass diese in radialer Richtung gegeneinander wirkende Kräfte erzeugen, was bewirkt, dass die noch zum Tragen zur Verfügung stehende Restkraft des elektromagnetischen Radiallagers geringer ist oder gar nicht mehr zur Verfügung steht.

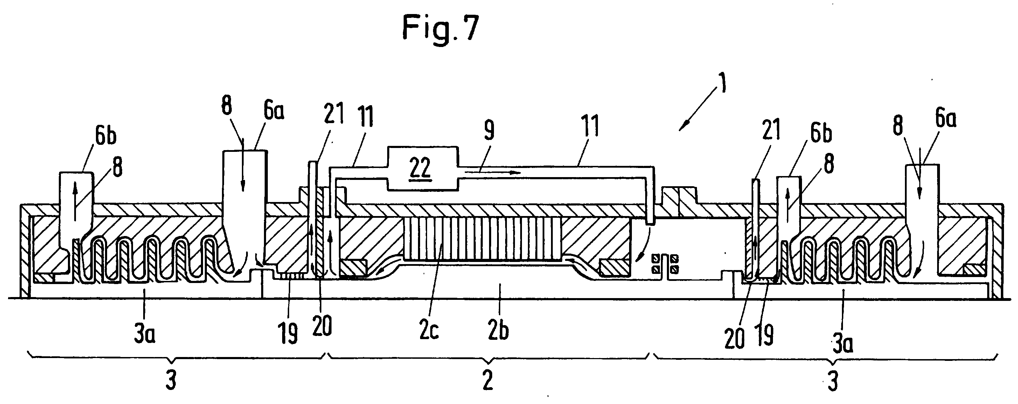

Fig. 7 zeigt einen Turboverdichter 1 mit einem im Vergleich zur Ausführungsform gemäss Fig. 4 separat gekühlten Elektromotor 2. Dabei ist zwischen dem Druckteil des Radialturboverdichters 3 und dem Elektromotor 2 je ein System mit einer Doppeldichtung, umfassend eine Trockengasdichtung 19 und nachfolgend eine Dichtung 20, angeordnet, wobei zwischen den beiden Dichtungen 19, 20 ein Auslass 21, als Vent oder Flair ausgestaltet, angeordnet ist, welcher durch die Gehäusewand 6 verläuft. Der Elektromotor 2 weist einen separaten, durch die Dichtungen 19, 20 vom Radialturboverdichter 3 getrennten Kühlkreislauf auf, welcher eine Verbindungsleitung 11 sowie einen Kühler 22 umfasst. Der den Elektromotor 2 kühlende Kühlgasmassenstrom 9 fliesst zwischen dem Stator 2c und dem Rotor 2b in Längsrichtung, wird im Bereich des einen Endes des Elektromotors 2 aus dem Gehäuse 6 in die Verbindungsleitung 11 geleitet, und wird nach dem Durchströmen des Kühlers 22 und der nachfolgend angeordneten Verbindungsleitung 11 am anderen Ende des Elektromotors 2 wieder in das Gehäuse 6 geleitet. Nicht dargestellt sind weitere Komponenten dieses Kreislaufes, wie eine das Kühlgas antreibende Vorrichtung oder eine Zuleitung für zusätzliches Kühlgas, um beispielsweise die über die Ableitung 21 anfliessenden Kühlgasanteile zu kompensieren. Als Kühlgas ist insbesondere ein nicht aggressives Gas wie Stickstoff geeignet. Die Anordnung gemäss Fig. 7 ist beispielsweise dann vorteilhaft, wenn kein Prozessgas auf einem tiefen Druckniveau zur Kühlung des Elektromotors 2 zur Verfügung steht, oder wenn das Prozessgas aggressive Eigenschaften aufweist, welches beispielsweise Teile des Elektromotors 2, wie die Welle 2a oder die elektrische Isolation, beschädigen könnte. Der Kühlkreislauf des Elektromotors 2 kann derart ausgelegt sein, dass dieser einen Druck im Bereich des atmosphärischen Druckes oder leicht darüber aufweist. Wie in Fig. 7 dargestellt kann der Kühlkreislauf derart ausgelegt sein, dass ein geringer Anteil des Kühlgasmassenstroms 9 über die Dichtung 20 zum Auslass 21 gelangt. Dadurch bleibt gewährleistet, dass der Kühlgasmassenstrom 9 nicht durch Fremdgase verunreinigt wird. Im Ausführungsbeispiel gemäss Fig. 7 fliesst zudem ein geringer Anteil des Prozessgases 8 über die Dichtung 19 zum Auslass 21. Dem Auslass 21 kann ein sogenannter Flair oder Vent nachgeordnet sein, um die aus dem Auslass 21 austretenden Gase unverbrannt abzuführen oder über eine nachfolgende Verbrennung abzuführen, insbesondere an die Umwelt abzugeben.

Ein Vorteil des Ausführungsbeispiels gemäss Fig. 7 ist darin zu sehen, dass das Kühlgas 9 einen geringen Druck aufweist und/oder dass als Kühlgas ein günstiges oder problemlos handhabbares Gas verwendbar ist, insbesondere ein Gas ohne aggressive Eigenschaften.

## Patentansprüche

1. Turboverdichter (1) umfassend einen Elektromotor (2), einen mehrstufigen Radialturboverdichter (3) sowie eine gemeinsame Welle (13), wobei ein Teilabschnitt der Welle (13) als Rotor (2b) des Elektromotors (2) ausgebildet ist, und wobei ein weiterer Teilabschnitt der Welle (13) als Läufer (3e) des Radialturboverdichters (3) ausgebildet ist, wobei der Läufer (3e) eine Verdichterwelle (3a) sowie damit verbundene Verdichterräder (3b) umfasst, und wobei zum Lagern der Welle (13) mehrere elektromagnetische Radiallager (5) in Verlaufsrichtung der Welle (13) beabstandet angeordnet sind, wobei zwischen dem Rotor (2b) des Elektromotors (2) und dem Verdichterrad (3b) ein einziges elektromagnetisches Radiallager (5) angeordnet ist.

2. Turboverdichter (1), insbesondere nach Anspruch 1, umfassend einen Elektromotor (2), einen mehrstufigen Radialturboverdichter (3) sowie eine gemeinsame Welle (13), wobei ein Teilabschnitt der Welle (13) als Rotor (2b) des Elektromotors (2) ausgebildet ist, und wobei ein weiterer Teilabschnitt der Welle (13) als Läufer (3e) des Radialturboverdichters (3) ausgebildet ist, wobei der Läufer (3e) eine Verdichterwelle (3a) sowie damit verbundene Verdichterräder (3b) umfasst, und wobei zum Lagern der Welle (13) mehrere elektromagnetische Radiallager (5) in Verlaufsrichtung der Welle (13) beabstandet angeordnet sind, wobei die Radiallager (5) auf einem gemeinsamen Basiselement (6p) abgestützt sind.

3. Turboverdichter (1) nach einem der vorhergehenden Ansprüche, gekennzeichnet durch ein gemeinsames Gehäuse (6) in welchem der Elektromotor (2), der Radialturboverdichter (3), die Welle (13) sowie die Radiallager (5) angeordnet sind, wobei das Gehäuse (6) ein Basiselement (6p) umfasst, auf welchem die Radiallager (5) abgestützt sind.

4. Turboverdichter (1) nach Anspruch 3, dadurch gekennzeichnet, dass ein Teil der Innenseite des Gehäuses (6) das Basiselement (6p) ausbildet.

5. Turboverdichter (1) nach einem der vorhergehenden Ansprüche, dadurch gekennzeichnet, dass Teilabschnitte (2a,2b,3a) der Welle (13) mittels einer Kupplung (4) miteinander verbunden sind.

6. Turboverdichter (1) nach Anspruch 5, dadurch gekennzeichnet, dass die Kupplung (4) eine sehr hohe Steifigkeit aufweist, um der Welle (13) in Längsrichtung eine hohe und insbesondere homogene Steifigkeit zu verleihen.

7. Turboverdichter (1) nach einem der vorhergehenden Ansprüche, dadurch gekennzeichnet, dass beidseits des Rotors (2b) des Elektromotors (2) ein mehrstufiger Radialturboverdichter (3) mit je einem Läufer (3e) angeordnet ist.

8. Turboverdichter (1) nach einem der vorhergehenden Ansprüche, dadurch gekennzeichnet, dass das gemeinsame Gehäuse (6) hermetisch abgedichtet ausgestaltet ist, und dass das Gehäuse (6) eine von aussen in den Radialturboverdichter (3) mündende Zuleitung (6c) und Ableitung (6d) aufweist, um ausserhalb des Gehäuses (6) angeordnete Vorrichtungen fluidleitend mit dem Radialturboverdichter (3) zu verbinden.

9. Turboverdichter (1) nach einem der vorhergehenden Ansprüche, dadurch gekennzeichnet, dass der Elektromotor (2) als ein Saugdruck resistenter Motor ausgestaltet ist, und dass der Elektromotor (2) an dessen einem, saugseitigen Ende fluidleitend mit dem Einlass einer bestimmten Stufe (3c, 3d) des Radialturboverdichters (3) verbunden ist, und dass das andere Ende des Elektromotors (2) mit dem Auslass der bestimmten Stufe (3c, 3d) oder einer nachfolgenden Stufe des Radialturboverdichters (3) fluidleitend verbunden ist, wobei als bestimmte Stufe (3c, 3d) vorzugsweise die erste Stufe (3c) gewählt ist.

10. Turboverdichter (1) nach Anspruch 9, dadurch gekennzeichnet, dass zwischen dem Elektromotor (2) und dem am saugseitigen Ende des Elektromotors (2) angeordneten Radialturboverdichter (3) kein Dichtungssystem angeordnet ist.

11. Turboverdichter (1) nach einem der Ansprüche 1 bis 8, dadurch gekennzeichnet, dass zwischen dem Radialturboverdichter (3) und dem Elektromotor (2) ein Dichtungssystem (19,20) angeordnet ist, und dass der Elektromotor (2) einen separaten Kühlkreislauf (22,11) aufweist.

12. Turboverdichter (1) nach einem der vorhergehenden Ansprüche, dadurch gekennzeichnet, dass ein auf die Welle (13) wirkendes Axiallager (7) in Längsrichtung der Welle (13) insbesondere zwischen dem Elektromotor (2) und dem Radialturboverdichter (3) angeordnet ist.

13. Turboverdichter (1) nach einem der vorhergehenden Ansprüche, dadurch gekennzeichnet, dass das Gehäuse (6) aus mehreren Teilgehäusen (6e, 6g) mit Verbindungsstellen (6k,6l) besteht, und dass die Verbindungsstellen (6k, 6l) fest und insbesondere dicht miteinander verbindbar sind, wobei das Gehäuse (6) insbesondere als ein Druckgehäuse ausgestaltet ist.

14. Turboverdichter (1) nach einem der vorhergehenden Ansprüche, dadurch gekennzeichnet, dass entlang der Welle (13) Sensoren (16a, 16b, 16c) zum Erfassen der Lage der Welle (13) angeordnet sind, und dass eine Steuer- und Regelvorrichtung (17) vorgesehen ist, welche mit den Sensoren (16a, 16b, 16c) Signal leitend verbunden ist, und dass die elektromagnetischen Radiallager (5) elektromagnetische Spulen (5b) aufweisen, welche mit der Steuer- und Regelvorrichtung (17) Signal leitend verbunden sind.

15. Anlage umfassend einen Turboverdichter nach einem der vorhergehenden Ansprüche.
